# EUROPÄISCHE PATENTANMELDUNG

(11) **EP 4 279 427 A1**
(43) Veröffentlichungstag der Anmeldung: **22.11.2023**
(21) Anmeldenummer: 23171207.6
(22) Anmeldetag: 03.05.2023
(51) Int. Cl.: B65G 41/00, B07B 13/16, B07B 1/00, B02C 21/02

(54) **AUFBEREITUNGSANLAGE**

(30) Priorität: 19.05.2022 DE 102022112640
(71) Anmelder: KLEEMANN GMBH, 73037 Göppingen (DE)
(72) Erfinder: WAGNER, Monika, 73098 Rechberghausen (DE); KAZMAIER, Benjamin, 73277 Owen (DE)
(74) Vertreter: Herrmann, Jochen

(57) **Zusammenfassung**

Aufbereitungsanlage (10), mit einer Siebeinheit (20) welche wenigstens ein Siebdeck (21.1, 21.2) aufweist und die Siebeinheit (20) einen Ableitbereich (22) aufweist, über den Aufbereitungsmaterial die Siebeinheit (20) verlässt, wobei im Ableitbereich (22) ein, in einer Arbeitsposition befindliches Transferband (30) angeordnet ist, um Aufbereitungsmaterial von der Siebeinheit (20) im Ableitbereich (22) aufzunehmen, und wobei das Transferband (30) dabei in einem Aufnahmebereich (25) der Aufbereitungsanlage (10) angeordnet ist. Erfindungsgemäß ist vorgesehen, dass das Transferband (30) mittels einer Stelleinrichtung der Aufbereitungsanlage längs seiner Förderrichtung von der Arbeitsposition in eine Wartungsposition verstellbar ist, wobei das Transferband (30) in der Wartungsposition zumindest teilweise aus dem Ableitbereich (22) herausbewegt ist, und dass eine, an der Aufbereitungsanlage (10) angebrachte Hebevorrichtung (50) vorgesehen ist, die das Transferband (30) in der Wartungsposition mittels einer Hebeanordnung, insbesondere eines Hebezeugs, (70) trägt.

## Beschreibung

Die Erfindung betrifft eine Aufbereitungsanlage, mit einer Siebeinheit zum Aussieben von Aufbereitungsmaterial, das der Siebeieinheit, insbesondere von einem Brechaggregat, zuführbar ist, wobei die Siebeinheit wenigstens ein Siebdeck aufweist und die Siebeinheit einen Ableitbereich aufweist, über den Aufbereitungsmaterial die Siebeinheit verlässt, wobei im Ableitbereich ein in einer Arbeitsposition befindliches Transferband angeordnet ist, um Aufbereitungsmaterial von der Siebeinheit im Ableitbereich aufzunehmen, und wobei das Transferband dabei in einem Aufnahmebereich der Aufbereitungsanlage angeordnet ist.

Erfindungsgemäße Aufbereitungsanlagen dienen zum Aufbereiten, beispielsweise Zerkleinern und/oder Sieben von mineralischem Material, beispielsweise Gesteinsmaterial, Beton oder dgl. Sie werden entweder als mobile oder als stationäre Anlagen eingesetzt. Über eine Befülleinheit kann das zu bearbeitende Material in die Anlage eingefüllt werden. Hierzu werden üblicherweise Bagger oder Radlader eingesetzt. Ausgehend von der Befülleinheit wird das Aufbereitungsmaterial über eine Fördereinrichtung einem Brechaggregat zugeleitet. Beispielsweise kann das Brechaggregat ein Backenbrecher, ein Prallbrecher oder ein Kegelbrecher sein. Im Brechaggregat wird das Aufbereitungsmaterial gebrochen und auf ein Brecherabzugsband geleitet. Über das Brecherabzugsband gelangt das Aufbereitungsmaterial zu einer Siebeinheit. Die Siebeinheit besitzt mindestens ein Siebdeck. Über das Siebdeck wird das Aufbereitungsmaterial ausgesiebt und an dem Siebdeck werden mindestens zwei Gesteinsfraktionen gebildet. Eine Gesteinsfraktion gelangt auf ein Transferband. Mittels des Transferbands wird diese Gesteinsfraktion aus dem Ableitbereich der Siebeinheit abgeleitet. Dabei kann es so sein, dass das Material vom Transferband auf ein Austragband übergeben wird, um es beispielsweise seitlich der Aufbereitungsanlage auf einer Halde aufzuhäufen oder um es auf ein Transportfahrzeug zu laden. Alternativ kann das Transferband das Material auch auf ein Brecherrückführband fördern, um das Material erneut dem Brecher zuzuführen.

Mitunter müssen Reinigung- oder Wartungsarbeiten in dem Aufnahmebereich, in dem das Transferband untergebracht ist, durchgeführt werden. Der Aufnahmebereich kann dabei den Ableitbereich der Siebeinheit umfassen. Um den Aufnahmebereich und/oder den Ableitbereich zugänglich zu machen, muss das Transferband ausgebaut und aus dem Aufnahmebereich entfernt werden. Dann ist der Ableitbereich hinter der Siebeinheit gut zugänglich. Zum Ausbau des Transferbands ist der Einsatz von externen Fahrzeugen, beispielsweise einem Bagger, einem Radlader oder einem Gabelstapler, erforderlich.

Dieses Vorgehen ist relativ zeitaufwendig und nicht immer einfach durchführbar.

Es ist Aufgabe der Erfindung, eine Aufbereitungsanlage, insbesondere eine Mineralmaterial-Bearbeitungsanlage bereitzustellen, bei der der Aufnahmebereich für das Transferband für Reinigungs-, Inspektions- oder Wartungsarbeiten leicht zugänglich gemacht werden kann.

Diese Aufgabe wird dadurch gelöst, dass das Transferband mittels einer Stelleinrichtung der Aufbereitungsanlage längs seiner Förderrichtung von der Arbeitsposition in eine Wartungsposition verstellbar ist, wobei das Transferband in der Wartungsposition zumindest teilweise aus dem Ableitbereich herausbewegt ist, und dass eine an der Aufbereitungsanlage angebrachte Hebevorrichtung vorgesehen ist, die das Transferband in der Wartungsposition mittels einer Hebeanordnung, insbesondere mittels eines Hebezeugs zumindest teilweise trägt.

Mit einer solchen Lösung wird einem Benutzer die Wartung der Aufbereitungsanlage erheblich erleichtert. Um den Ableitbereich hinter der Siebeinheit zugänglich zu machen, kann er das Transferband mittels der maschinenseitigen Stellvorrichtungen aus dem Aufnahmebereich heraus in die Wartungsposition bewegen. Hierzu wird keine externe Maschine benötigt. Zusätzlich wird das Transferband mittels der Hebevorrichtungen in der Wartungsposition gesichert. Hierzu wird das Transferband mit einem Hebezeug, welches an der Hebevorrichtung anbringbar ist, gehalten. Vorzugsweise ist der durch die Stellvorrichtung bereitgestellte Verstellweg so groß, dass mehr als die Hälfte der Breite des Aufnahmebereichs/Ableitbereiches des Siebes zugänglich gemacht werden kann. Wenn sich das Transferband in der Wartungsposition befindet, so kann der Benutzer im Aufnahmebereich/Ableitbereich des Siebes die erforderlichen Wartungsarbeiten durchführen. Beispielsweise kann er diesen Bereich reinigen. Denkbar ist es auch, dass an der Siebeinheit dann selbst Wartungsarbeiten leicht durchgeführt werden können. Beispielsweise kann unter Nutzung des nun zugänglichen Aufnahmebereichs/Ableitbereich des Siebes ein Siebbelag der Siebeinheit ausgetauscht werden.

Gemäß einer bevorzugten Ausgestaltungsvariante der Erfindung kann es vorgesehen sein, dass die Hebevorrichtung mittels eines Schwenklagers von einer Ruheposition in eine ausgeschwenkte Tragposition verschwenkbar ist. In der Ruheposition kann die Hebevorrichtungen platzsparend an die Aufbereitungsanlage angeklappt werden. Dies hat nicht alleine nur dann Vorteile, wenn die Aufbereitungsanlage zu Transportzwecken platzsparend hergerichtet werden muss.

Hierbei ergibt sich für das Schwenklager dann ein einfacher Aufbau und stabiler Aufbau, wenn vorgesehen ist, dass die Hebevorrichtung zwei zueinander beabstandete Lagerplatten aufweist, die an einem Maschinengestell der Aufbereitungsanlage befestigt sind, dass zwischen den Lagerplatten ein Lagerstück gehalten ist, und dass das Lagerstück mittels eines Lagerbolzens mit den beiden Lagerplatten schwenkbar verbunden ist.

Eine besonders bevorzugte Erfindungsvariante ist dergestalt, dass die Hebevorrichtung einen Tragarm aufweist, der von dem/einem Maschinengestell in der Tragposition absteht und dass der Tragarm eine Tragvorrichtung trägt, die in Richtung der Längserstreckung des Tragarms verstellbar an dem Tragarm angeordnet ist. An der Tragvorrichtung kann das Hebezeug für das Transferband angekoppelt werden. Dadurch dass die Tragvorrichtung an dem Tragarm verstellbar ist, kann die Bewegung des Transferbands zwischen seiner Arbeitsposition und der Wartungsposition geführt werden. Der auskragende Tragarm stellt für die Tragvorrichtung ausreichend Bewegungsspielraum zur Verfügung, um das Transferband auf seinem Weg von der Arbeitsposition in die Tragposition zumindest in Teilbereichen zu stützen.

Ein stabiler und gleichzeitig klein bauender Aufbau ergibt sich hierbei dann, wenn vorgesehen ist, dass die Tragvorrichtung einen Rollenträger aufweist, an dem Tragrollen drehbar gelagert sind, dass die Tragrollen auf einer Rollenführung des Tragarms bei einer Verstellung der Tragvorrichtung gegenüber dem Tragarm abrollen, wobei die Rollenführung vorzugsweise von einem Profilabschnitt des Tragarms, besonders bevorzugt von einem Gurt eines T-Trägers oder eines Doppel-T-Trägers gebildet ist. Die Tragvorrichtung kann dann in der Art einer Laufkatze an dem Tragarm verstellt werden, wenn das Transferband von der Arbeitsposition in die Wartungsposition (und umgekehrt) gebracht wird. Vorzugsweise ist es so, dass die Tragvorrichtung mit dem Tragarm auswechselbar verbindbar ist. Dies hat den Vorteil, dass dann, wenn das Transferband in die Wartungsposition gebracht werden muss, die Tragvorrichtung an die Hebevorrichtung angebaut werden kann. Wenn das Transferband wieder nach erfolgter Wartung in seine Arbeitsposition gebracht ist, lässt sich anschließend die Tragvorrichtung wieder abnehmen und gesichert verstauen. Bevorzugt kann die Tragvorrichtung auch an mindestens einer weiteren Hebevorrichtung an der Maschine angebaut und benutzt werden.

Um das Transferband bei einer Verstellung von der Arbeitsposition in die Wartungsposition sicher zu stützen, kann die Hebevorrichtung im Rahmen der Erfindung entweder unterhalb des Transferbands oder oberhalb des Transferbands angeordnet sein.

Vorzugsweise ist es jedoch für eine gute Zugänglichkeit und leichte Bedienbarkeit vorgesehen, dass die Hebevorrichtung oberhalb des Transferbands angeordnet ist. Hier kann die Ausgestaltung dann so getroffen sein, dass die Tragvorrichtung einen Hebezeugträger aufweist, und dass das Transferband in der Wartungsposition mittels des Hebezeugs an dem Hebezeugträger aufgehängt ist und sich vorzugsweise an seinem dem Aufnahmebereich zugewandten Ende an der Stelleinrichtung abstützt. Das auskragende Ende des Transferbands ist wieder sicher mit der Hebevorrichtung gestützt. Wenn zusätzlich das Transferband sich mit seinem dem Aufnahmebereich zugewandten Ende an der Stellvorrichtung abstützt, dann muss nicht die gesamte Last des Transferbands von der Hebevorrichtung aufgenommen werden. Ein Teil der Last kann dann über die Stelleinrichtung in das Maschinengestell abgetragen werden.

Gemäß einer möglichen Erfindungsvariante kann es vorgesehen sein, dass das Transferband einen Träger aufweist, an dem zwei Umlenkrollen gelagert sind, dass ein endlos umlaufendes Förderband um die Umlenkrollen derart geführt ist, dass sich ein Lasttrum und ein Leertrum ergeben, dass in einem Bereich des Trägers der in der Wartungsposition aus dem Aufnahmebereich herausbewegt ist, vorzugsweise im Bereich der Umlenkrolle, mindestens ein Koppelstück an dem Träger angekoppelt ist, an dem das Hebezeug in der Wartungsposition angekoppelt ist. Bei einer solchen Lösung kann das Transferband in der Wartungsposition an seinem auskragenden Ende sicher gehalten werden. Vorzugsweise sind dann keine zusätzlichen Hilfsmittel erforderlich, um das Transferband an seinem auskragenden Ende zu halten.

Erfindungsgemäß kann es weiterhin vorgesehen sein, dass das Transferband einen oder mehrere vordere und einen oder mehrere hintere Stützkörper aufweist, dass in der Wartungsposition des Transferbands der wenigstens eine vordere Stützkörper in einem dem Aufnahmebereich abgewandten Bereich und der wenigstens eine hintere Stützkörper in einem dem Aufnahmebereich zugewandten Bereich des Transferbands angeordnet ist, und dass die Stützkörper in der Arbeitsposition auf einer Stützschiene abgestützt sind, um das Transferband mittelbar oder unmittelbar an dem Maschinengestell abzustützen. In der Arbeitsposition kann das Transferband sicher über die vorderen und die hinteren Stützkörper auf einer Stützschiene abgestützt werden. Dabei lassen sich, beispielsweise bei entsprechender Auslegung der Stützkörper, die während des Arbeitseinsatzes auftretenden Belastungen sicher über die Stützkörper ableiten. Wenn das Transferband von der Arbeitsposition in die Wartungsposition verstellt werden soll, so lässt sich der mindestens eine vordere Stützkörper von der Stützschiene abheben, was vorzugsweise mit der Hebevorrichtung möglich ist. Dann kann das Transferband von der Arbeitsposition in die Wartungsposition verstellt werden. Beispielsweise bleiben dabei die oder der hintere Stützkörper in Verbindung mit der Stützschiene um die Verstellbewegung zu führen und um vorzugsweise einen Teil der Last des Transferband über die Stützschiene abzuleiten.

Denkbar ist es hierbei, dass die Stützkörper von Führungsrollen gebildet sind, die drehbar an dem Transferband gelagert sind und die sich in der Arbeitsposition auf einer Lauffläche oder auf Laufflächen der als Führungsschiene ausgebildeten Stützschiene abstützen. Über die Führungsrollen kann die Bewegung des Transferbands verlässlich geführt werden.

Eine erfindungsgemäße Aufbereitungsanlage kann auch dadurch gekennzeichnet sein, dass das Transferband mittels der Stelleinrichtung in mindestens zwei zueinander versetzte Arbeitspositionen bringbar ist.

Beispielsweise kann es dann so sein, dass in einer ersten Arbeitsposition das Transferband das von der Siebeinheit kommende Aufbereitungsmaterial einem Austragband, beispielsweise einem Rückführband zuführt, in einer zweiten Arbeitsposition kann beispielsweise das Transferband das Aufbereitungsmaterial nicht auf das Austragband, sondern seitlich aus dem Arbeitsbereich der Aufbereitungsanlage fördern.

Denkbar ist es auch, dass in den verschiedenen Arbeitspositionen unterschiedliche Abwurfpositionen für das Transferband verwirklicht werden. Mit anderen Worten kann das Transferband im begrenzten Maße längenverschieblich im Aufnahmebereich angeordnet sein. Dadurch kann der Abstand des Abwurforts des Transferbands relativ zum Aufgabeort eines anschließenden Austragsbands verstellt werden, um den Abwurfpunkt des Transferbands auf unterschiedliche Bandgeschwindigkeiten (zum Beispiel aufgrund unterschiedlicher Drehzahlen des Antriebsmotors) anpassen zu können. So kann beispielsweise, abhängig von der Fördergeschwindigkeit des Transferbands, die Abwurfposition verändert werden, um die gewünschte Abwurfstelle für das Aufbereitungsmaterial, welches von dem Transferband abgeleitet wird, einzustellen.

Um die Wartungsposition des Transferbands auf einfache Weise zu sichern, kann es vorgesehen sein, dass der Stellweg des wenigstens einen hinteren Stützkörpers in der Wartungsposition an einem Anschlag, der mittelbar oder unmittelbar am Maschinengestell angeordnet ist, begrenzt ist.

Die Erfindung wird im Folgenden anhand eines in den Zeichnungen dargestellten Ausführungsbeispiels näher erläutert. Es zeigen:
- Figur 1: in Seitenansicht und Prinzipdarstellung eine Aufbereitungsanlage,
- Figur 2: in perspektivischer Ansicht und Teildarstellung eine Siebeinheit der Aufbereitungsanlage gemäß Figur 1,
- Figur 3: eine Detaildarstellung der Darstellung gemäß Figur 2,

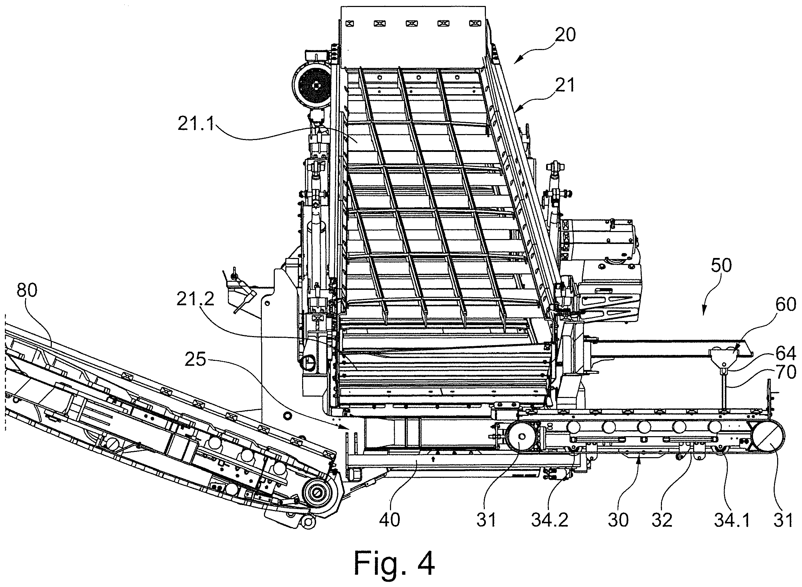

- Figur 4: die Baueinheit gemäß den Figuren 2 und 3 in einer Frontansicht und
- Figur 5: die Darstellung gemäß Figur 4 in einer veränderten Betriebsstellung.

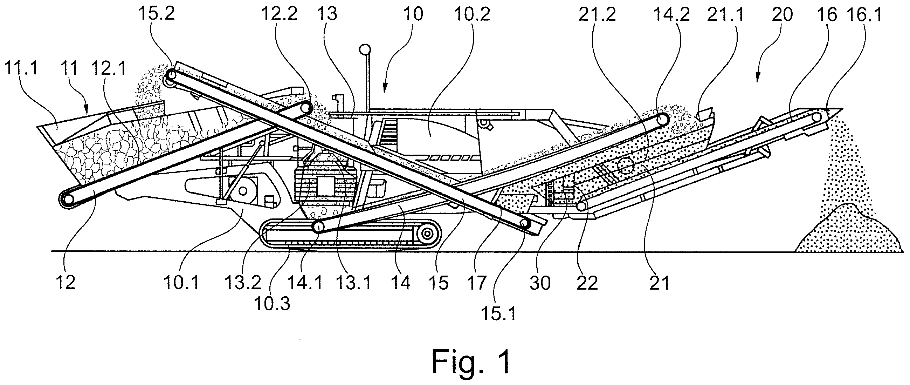

Figur 1 zeigt eine mobile Aufbereitungsanlage 10, bei der im vorliegenden Ausführungsbeispiel ein Brechaggregat 13 mit einer Siebeinheit 20 kombiniert ist. Erfindungsgemäße Aufbereitungsanlagen 10 können auch als Siebanlagen ohne ein Brechaggregat 13 gestaltet sein und entsprechend eine Siebeinheit 20 aufweisen.

Die Aufbereitungsanlage 10 besitzt ein Maschinengestell 10.1, das von zwei Kettenlaufwerken 10.3 getragen ist. Mittels der Kettenlaufwerken 10.3 kann die Aufbereitungsanlage 10 verfahren werden, in Figur 1 in der Bildebene von links nach rechts (und umgekehrt). Durch unterschiedliche Geschwindigkeiten des linken und rechten Ketten laufwerks können auch Kurven gefahren werden bzw. die Aufbereitungsanlage kann auf der Stelle über die Hochachse gedreht werden.

Das Maschinengestell 10.1 trägt einen Antrieb 10.2. Dieser Antrieb 10.2 ist als Verbrennungsmotor ausgebildet und kann an eine Hydraulikeinheit angekoppelt sein. Über Hydraulikmotoren der Hydraulikeinheit können einzelne Anlagenkomponenten angetrieben werden. Zusätzlich oder alternativ kann es auch vorgesehen sein, dass der Antrieb 10.2 über einen Generator elektrische Energie erzeugt, die einzelnen Elektromotoren der Aufbereitungsanlage 10 zugeleitet wird.

Die Aufbereitungsanlage 10 besitzt eine Aufgabeeinheit 11 mit einem Aufgabetrichter 11.1. Unterhalb des Aufgabetrichters 11.1 ist eine Fördereinrichtung 12, beispielsweise ein umlaufendes Förderband angeordnet. Die Fördereinrichtung 12 ist mit einem Aufgabebereich dabei so dem Aufgabetrichter 11.1 zugeordnet, dass in den Aufgabetrichter 11.1 eingefülltes Aufbereitungsmaterial auf den Aufgabebereich 12.1 gelangt und von der Fördereinrichtung 12 hin zu einem Übergabebereich 12.2 gefördert wird. Das Aufbereitungsmaterial kann mit einem Bagger oder Radlader in den Aufgabetrichter 11.1 eingefüllt werden.

Im Übergabebereich 12.2 wird das Aufbereitungsmaterial von der Fördereinrichtung 12 in ein Brechaggregat 13 geleitet. Im vorliegenden Ausführungsbeispiel wird das Aufbereitungsmaterial direkt in das Brechaggregat 13 eingefüllt. Denkbar ist es jedoch auch, dass eine weitere Fördereinrichtung und/oder ein Vorsieb vorgesehen ist/sind über das das Aufbereitungsmaterial in das Brechaggregat 13 gelangt.

Das Brechaggregat 13 besitzt ein Brechergehäuse 13.2. In diesem Brechergehäuse ist ein Brechrotor 13.1 angeordnet. Im vorliegenden Ausführungsbeispiel bildet der Brechrotor 13.1 einen Kegelbrecher. Anstelle des Brechrotors 13.1 kann auch eine andere Brechereinheit Verwendung finden, beispielsweise ein Backenbrecher oder ein Rotationsprallbrecher.

Unterhalb des Brechaggregats 13 ist ein Brecherabzugsband 14 mit einem aufgabeseitigen Ende 14.1 angeordnet. Das Brecherabzugsband 14 ist wieder als endlos umlaufendes Förderband ausgebildet und weist gegenüber dem aufgabeseitigen Ende 14.1 einen Abwurfbereich 14.2 auf. Der Abwurfbereich 14.2 ist oberhalb einer Siebeinheit 20 angeordnet.

Die Siebeinheit 20 besitzt einen Siebkasten 21. In diesem sind zwei Siebdecks 21.1, 21.2 übereinanderliegend angeordnet. Im Rahmen der Erfindung ist auch denkbar, dass in dem Siebkasten 21 nur ein Siebdeck 21.1 angeordnet ist oder mehr als 2 Siebdecks angeordnet sind.

Die Siebeinheit 20 weist eine Sieb-Transportrichtung auf, die zugunsten einer platzsparenden Bauweise, vorzugsweise entgegengesetzt oder im Wesentlichen entgegengesetzt zur Förderrichtung des Brecherabzugsbands 14 verläuft, wie Figur 1 zeigt. Der Abwurfbereich 14.2 des Brecherabzugsbands 14 ist oberhalb des oberen Siebdecks 21.1 angeordnet und dem oberen Siebdeck 21.1 an seinem in Transportrichtung vorderen Ende zugeordnet.

Die Sieb-Maschenweite des oberen Siebdecks 21.1 ist größer, als die Sieb-Maschenweite des darunterliegenden zweiten Siebdecks 21.2. Auf diese Weise können an den beiden Siebdecks 21.1 und 21.2 unterschiedliche Ziel-Korngrößen ausgesiebt werden.

Unterhalb des Siebdecks 21.2 ist ein Förderband 16 angeordnet. Dieses Förderband 16 ist vorzugsweise als endlos umlaufendes Förderband 16 ausgebildet. Es nimmt das von dem unteren Siebdeck 21.2 ausgesiebte Aufbereitungsmaterial auf und fördert es zu seinem abwurfseitigen Ende 16.1. Von dort kann das ausgesiebte Aufbereitungsmaterial auf eine Halde abgeworfen werden, wie Figur 1 veranschaulicht.

Das Aufbereitungsmaterial, welches aufgrund seiner Korngröße nicht durch das untere Siebdeck 21.2 fällt, wird längs des Siebdecks 21.2 in Sieb-Transportrichtung zu einem Ableitbereich 22 geführt. Hier verlässt dieses Material die Siebeinheit 20 und fällt auf ein Transferband 30.

Das Transferband 30 weist ein endlos umlaufendes Förderband 32 auf. Die Förderrichtung des Transferbands 30 verläuft quer zur Sieb-Transportrichtung, insbesondere in Breitenrichtung der Aufbereitungsanlage 10 (im Wesentlichen senkrecht zur Bildebene gemäß Figur 1).

Das Aufbereitungsmaterial, welches aufgrund seiner Korngröße nicht durch das obere Siebdeck 21.1 fällt, gelangt im Ableitbereich 22 auf eine Überkornabführung 17. Die Überkornabführung 17 kann wieder als endlos umlaufendes Förderband ausgebildet sein. Die Förderrichtung der Überkornabführung 17 verläuft quer zur Sieb-Transportrichtung, insbesondere in Breitenrichtung der Aufbereitungsanlage 10.

Die Überkornabführung 17 erstreckt sich zumindest über die gesamte Breite (in Richtung der Bildtiefe gemäß Figur 1) des oberen Siebdecks 21.1. Entsprechend kann die Überkornabführung 17 das gesamte Material, welches im Ableitbereich 22 vom Siebdeck 21.1 abgeführt wird, aufnehmen. Dieses Aufbereitungsmaterial wird über die Überkornabführung 17 hin zu einem Rückführband 15 transportiert. Entsprechend ist ein Abwurfbereich der Überkornabführung 17 in einem Aufnahmebereich 15.1 des Rückführbands 15 angeordnet. In diesem Aufnahmebereich 15.1 kann ein Aufnahmetrichter des Rückführbands 15 angeordnet sein, um das Material besser sammeln und dem Rückführband 15 zuführen zu können. Der Übersichtlichkeit halber ist in Figur 1 auf die Darstellung dieses Aufnahmetrichters verzichtet worden.

Das Rückführband 15 besitzt einen Rückführband-Abwurfbereich 15.2. Dieser ist oberhalb des Aufnahmetrichters 11.2 angeordnet. Entsprechend kann das von dem Rückführband 15 abtransportierte Aufbereitungsmaterial in den Aufgabetrichter 11.1 eingefüllt werden.

Entsprechend kann also das Aufbereitungsmaterial, welches von der Überkornabführung 17 auf das Rückführband 15 gefördert wird, einer erneuten Bearbeitung im Brechaggregat 13 zugeführt werden.

Wie Figur 1 zeigt, erstreckt sich das Transferband 30 vorzugsweise zumindest über die gesamte (in Richtung der Bildtiefe gemäß Figur 1 verlaufende) Breite des unteren Siebdecks 21.2. Entsprechend gelangt das gesamte Material, welches von dem Siebdeck 21.2 im Ableitbereich 22 von der Siebeinheit 20 abgeführt wird, auf das Transferband 30.

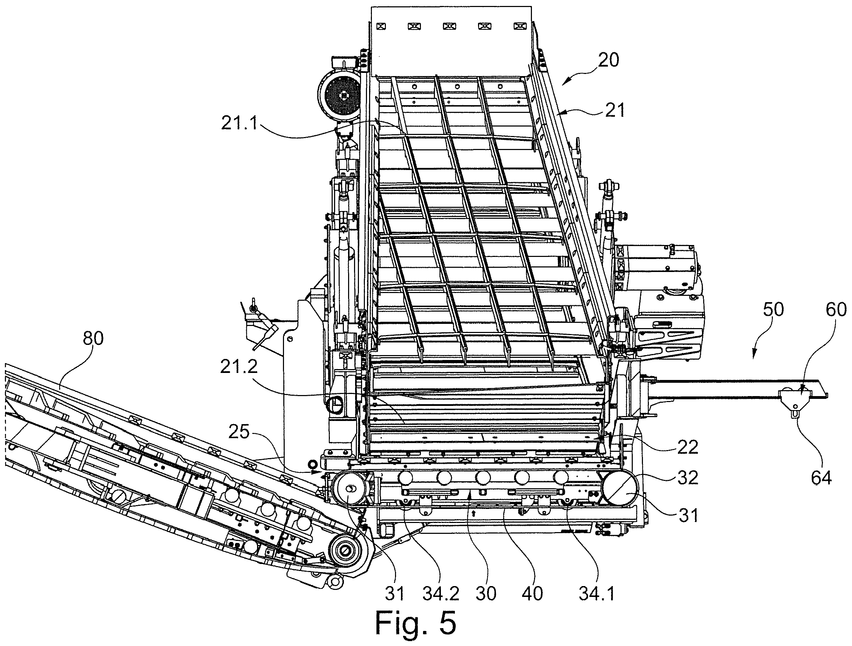

Das von dem Transferband 30 aufgenommene Aufbereitungsmaterial wird in Breitenrichtung der Aufbereitungsanlage 10 gefördert und auf einen Austragband 80 aufgegeben, welches in Figur 5 gezeigt ist. Das Austragband 80 ist in Figur 1 durch den Maschinenkörper der Aufbereitungsanlage 10 verdeckt und daher in dieser Darstellung nicht erkennbar. Über das Austragband 80 kann das Material des Transferbands 30 auf eine Halde aufgehäuft, auf ein bereitstehendes Fahrzeug geladen oder in eine nachgeschaltete Anlage gefördert werden.

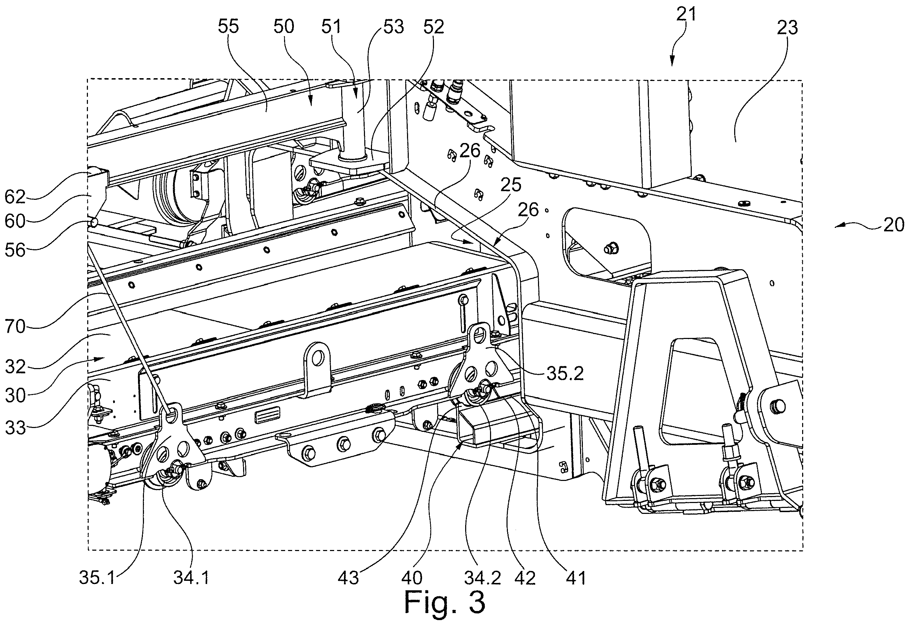

Die Siebeinheit 20 besitzt den Siebkasten 21. Dieser weist zwei zueinander parallele Seitenwände 23 (s. Fig. 3) auf. Frontseitig ist der Siebkasten 21 mittels einer Frontwand abgeschlossen. Im Bereich der Seitenwände 23 sind Vibrationsantriebe 24 vorgesehen. Mit diesen Vibrationsantrieben 24 können die beiden Siebdecks 21.1, 21.2 im Siebkasten 21 angetrieben und in eine schwingende Bewegung versetzt werden. Aufgrund dieser schwingenden Bewegung und der geneigten Anordnung der Siebdecks 21.1 und 21.2 entsteht eine Sieb-Transportrichtung auf den Siebdecks 21.1, 21.2, die in Richtung der Längserstreckung der Siebdecks 21.1, 21.2 in Richtung hin zu dem Ableitbereich 22 verläuft. Die beiden Seitenwände 23 können mit einer Aussparung 26 versehen sein. Unterhalb der Aussparungen 26 verläuft das Transferband 30.

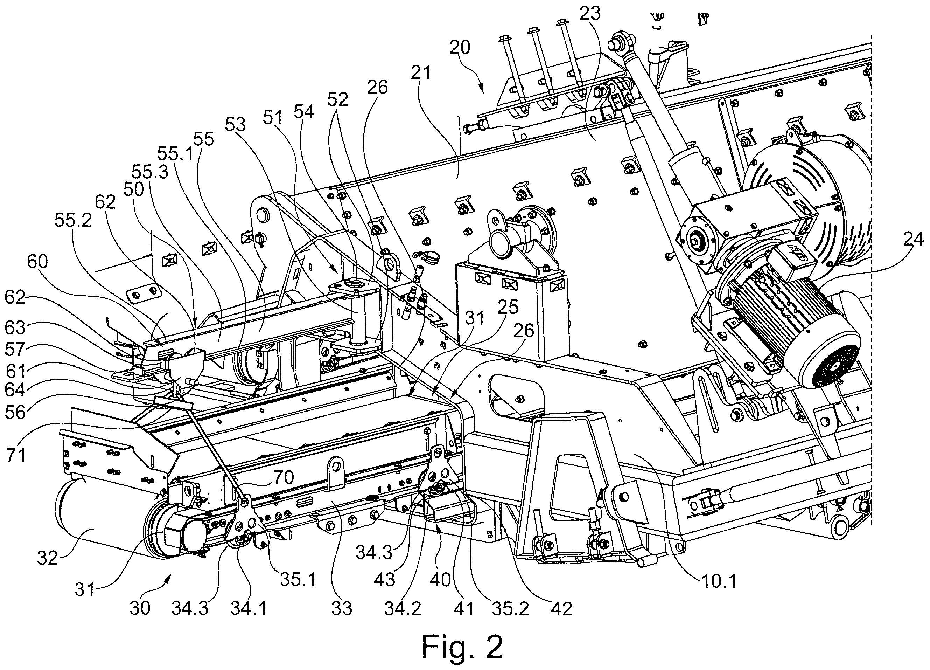

Wie Figur 2 erkennen lässt, ist das Förderband 32 des Transferbands 30 über zwei Umlenkrollen 31 mit zueinander parallelen Drehachsen geführt. Somit ergibt sich auf der Oberseite des Förderbands 32 der Obertrum, auf der Unterseite des Förderbands 32 der Untertrum. Auf dem Obertrum des Förderbands 32 kann das von dem Siebdeck 21.2 kommende Aufbereitungsmaterial abtransportiert werden.

Das Transferband 30 besitzt einen Träger 33, an dem die beiden Umlenkrollen 31 gelagert sind. An gegenüberliegenden Seiten des Trägers 33 sind Stützkörper 34.1, 34.2 angeordnet. Dabei sind die vorderen Stützkörper 34.1 im Bereich des einen längsseitigen Endes des Transferbands 30 und die hinteren Stützkörper 34.2 am gegenüberliegenden längsseitigen Endbereich des Transferbands 30 angeordnet.

Wie die Darstellung gemäß Figur 2 veranschaulicht, können die Stützkörper 34.1 von Führungsrollen gebildet sein, die drehbar mit dem Träger 33 verbunden sind.

Vorzugsweise ist es vorgesehen, dass die vorderen Stützkörper 34.1 und die hinteren Stützkörper 34.2 auf gegenüberliegenden Längsseiten des Transferbands 30 angeordnet sind.

Jeder der Längsseiten des Transferbands 30 ist eine Stützschiene 40 zugeordnet, wobei die beiden Stützschienen 40 im Aufnahmebereich 25 verbaut sind und in Breitenrichtung der Aufbereitungsanlage 10 verlaufen. Die Stützschienen 40 können dabei von Hohlprofilabschnitten gebildet sein.

Die Stützschienen 40 weisen eine Lauffläche 41 auf, die sich in Breitenrichtung der Aufbereitungsanlage 10 erstreckt. Die Lauffläche 41 einer Stützschiene 40 dient dazu in der Arbeitsposition den vorderen Stützkörper 34.1 und den hinteren Stützkörper 34.2 einer Längsseite des Transferbands 30 aufzunehmen und abzustützen. Dies ist beispielsweise in Figur 5 veranschaulicht, in der die beiden Stützkörper 34.1 und 34.2 auf der Stützschiene 40 aufsitzen.

Figur 2 veranschaulicht weiter, dass die Stützschiene 40 im Anschluss an die Lauffläche 41 einen Steg 42 aufweisen kann, wobei der Steg 42 nach oben absteht. Der Steg 42 arbeitet mit einer umlaufenden Schulter 34.3 der als Führungsrollen ausgebildeten Stützkörper 34.1, 34.2 zusammen, derart, dass die Schulter 34.3 einseitig an dem Steg 42 geführt ist, wie Figur 2 zeigt.

Eine oder beide Stützschienen 40 weisen an ihrem längsseitigen Ende einen Anschlag 43 auf. Der Anschlag 43 blockiert die Stützkörper 34.1, 34.2, wenn sie daran anliegen. In der in Figur 2 gezeigten Wartungsposition ist der hintere Stützkörper 34.2 an dem Anschlag 43 blockiert.

Wie Figur 2 weiter zeigt, ist an der Aufbereitungsanlage 10 eine Hebevorrichtung 50 angebracht. Die Hebevorrichtung 50 besitzt einen Tragarm 55, der über ein Schwenklager 51 schwenkbar an die Aufbereitungsanlage 10 angekoppelt ist.

Das Schwenklager 51 kann so gestaltet sein, dass es zwei zueinander beabstandete Lagerplatten 52 aufweist. Zwischen den Lagerplatten 52 ist ein Lagerstück 53 eingestellt. Dieses Lagerstück 53 ist als Hohlteil ausgebildet und nimmt einen Lagerbolzen 54 auf. Der Lagerbolzen 54 ist unverlierbar an zumindest einer der Lagerplatten 52 gehalten.

Das Lagerstück 53 ist mit dem Tragarm 55 verbunden. Dementsprechend kann der Tragarm 55 über das Lagerstück 53 gegenüber dem Lagerbolzen 54 und damit gegenüber den Lagerplatten 52 verschwenkt werden, wobei die Schwenkachse vertikal verläuft.

Der Tragarm 55 wird von einem Profilstück gebildet. Dieses Profilstück kann beispielsweise ein Doppel-T-Träger sein, der einen Obergurt 55.2 und einen Untergurt aufweist. Der Obergurt 55.2 ist mit dem Untergurt mittels eines Stegs 55.3 verbunden. Der Untergurt bildet eine Rollenführung 55.1.

An dem dem Schwenklager 51 abgewandten Ende ist ein Gegenanschlag 57 an dem Tragarm 55 vorgesehen.

Die Hebevorrichtung 50 trägt eine Tragvorrichtung 60. Die Tragvorrichtung 60 ist vorzugsweise auswechselbar mit der Hebevorrichtung 50 verbindbar. Dementsprechend kann die Tragvorrichtung 60 bedarfsweise an die Hebevorrichtung 50 angebaut oder von dieser abgebaut werden.

Die Tragvorrichtung 60 besitzt einen Rollenträger 61, an dem Tragrollen 62 drehbar gelagert sind. Vorzugsweise sind zu beiden Seiten des Stegs 55.3 des Tragarms 55 jeweils zwei Tragrollen 62 verwendet. Die Tragrollen 62 sind so am Rollenträger 61 befestigt, dass sie auf der Oberseite des Untergurts/der Rollenführung 55.1 abrollen können. Entsprechend kann die Tragvorrichtung 60 in Längsrichtung des Tragarms 55, ähnlich einer Laufkatze verschoben werden.

An dem Rollenträger 61 ist ein Anschlag 63 vorgesehen. Die Stellbewegung der Tragvorrichtung 60 in Richtung des längsseitigen Endes des Tragarms 55 ist mittels des Anschlags 63 begrenzt, der an dem Gegen-Anschlag 57 anschlägt. In entgegengesetzte Richtung schlägt der Rollenträger 61 an dem Lagerstücke 53 an.

Die Tragvorrichtung 60 besitzt einen Hebezeugträger 64. Dieser Hebezeugträger 64 kann in Form einer Lasche ausgebildet sein, die nach unten von der Tragvorrichtung 60 absteht.

Beispielsweise kann es so sein, dass der Rollenträger 61 ein Halterstück 56, beispielsweise in Form eines Bolzens aufweist, der unterhalb des Tragarms 55 den Hebezeugträger 64 hält.

An dem Hebezeugträger 64 der Tragvorrichtung 60 kann ein Hebezeug 70 angebracht werden. Das Hebezeug besteht aus biegeschlaffen Tragelementen, beispielsweise Ketten, Seilen oder dergleichen. Vorzugsweise ist es so, dass diese Tragelemente unter Vermittlung einer Zugvorrichtungen 71 an dem Hebezeugträger 64 befestigt sind, wie Figur 2 zeigt.

Das Hebezeug 70 kann dem Hebezeugträger 64 abgewandt auswechselbar mit Koppelstücken 35.1 des Transferbands 30 gekoppelt werden. Die Koppelstücke 35.1 sind zu beiden Längsseiten des Transferbands 30 angeordnet. Die Koppelstücke 35.1 können als Laschen ausgebildet sein, die nach oben abstehend ein Aufnahmeauge aufweisen, an dem das Hebezeug 70 befestigt werden kann. Die Koppelstücke 35.1 sind vorzugsweise an dem in der Wartungsposition des Transferbands auskragenden Ende an dem Träger 33 befestigt. Vorzugsweise sind die Koppelstücke 35.1 im Bereich der vorderen Stützkörper 34.1 an dem Träger 33 befestigt.

Alternativ kann auch eine Traverse einsetzbar sein, die sich zwischen den beiden Längsseiten des Transferbandes über dem Obertrum des Transferbandes erstreckt. An diese Traverse kann das Hebezeug 70 gekoppelt werden.

Figur 2 zeigt weiter, dass auch hintere Koppelstücke 35.2 an dem Transferband 30 befestigt sein können, wobei aus Gründen der Reduzierung des Teileaufwands die hinteren Koppelstücke 35.2 vorzugsweise baugleich mit den Koppelstücken 35.1 sind. Die hinteren Koppelstücke 35.2 sind im Endbereich des Transferbands 30, der dem Aufnahmebereich 25 zugewandt ist, angeordnet. Auch hier können die hinteren Koppelstücke 35.2 wieder vorzugsweise im Bereich der hinteren Stützkörper 34.2 befestigt sein. Die vorderen und hinteren Koppelstücke 35.1 und 35.2 können verwendet werden, wenn das Transferband vollständig von der Aufbereitungsanlage 10 entfernt werden soll, wozu beispielsweise ein geeignetes Tragfahrzeug, beispielsweise ein Radlader oder ein Gabelstapler, zum Einsatz kommt.

Im Folgenden wird die Funktionsweise der erfindungsgemäßen Vorrichtung näher beschrieben. In Figur 5 befindet sich das Transferband 30 in seiner Arbeitsposition im Aufnahmebereich 25. Wenn nun dieser Aufnahmebereich 25 für Wartungs- oder Instandhaltungsarbeiten zugänglich gemacht werden soll, so wird zunächst die Hebevorrichtung 50 ausgehend von einer seitlich an den Siebkasten 21 angeklappten Ruheposition in die in Figur 5 gezeigte Tragposition ausgeschwenkt. Hierbei kann der Tragarm 55 mittels des Schwenklagers 51 ausgeschwenkt werden. Anschließend kann die Tragvorrichtung 60 mit dem Tragarm 55 verbaut werden, wobei dann die Tragrollen 62 auf der Rollenführung 55.1 des Tragarms 55 aufliegen.

Nun kann die Tragvorrichtung 60 in Richtung zu dem Schwenklager 51 hin verstellt werden. Dann wird das Transferband 30 von seiner Arbeitsposition bis zu den Anschlägen 43 verschoben. Das Transferband 30 kann dabei auf den Stützschienen 40 so weit verschoben werden, bis die vorderen Stützkörper 34.1 an dem Anschlag 43 der Stützschiene 40 anliegen und so die weitere Verstellung des Transferbands 30 blockiert ist.

Anschließend wird das Hebezeug 70 an dem Hebezeugträger 64 und an den Koppelstücken 35.1 befestigt.

In das Hebezeug 70 ist die Zugvorrichtung 71 integriert. Als Zugvorrichtung 71 kann z. Bsp. ein Flaschenzug verwendet werden. Mit dieser Zugvorrichtung 71 können die Zugstränge des Hebezeugs 70 verkürzt und damit das Transferband 30 an den Koppelstücken 35.1 ein Stück weit gegen der Schwerkraftrichtung angehoben werden. Dabei gelangen die vorderen Stützkörper 34.1 außer Eingriff mit dem Anschlag 43 der Stützschiene 40. Nun kann das Transferband 30 weiter auf den Stützschienen 40 verschoben werden, wobei die hinteren Stützkörper auf den Stützschienen 40 verstellt werden. Das nun auskragende Ende des Transferbands 30 ist sicher an der Hebevorrichtung 50 gehalten. Ein Teil der Last des Transferbands 30 wird weiter über die Stützschienen 40 abgetragen.

Die weitere Verstellung des Transferbands 30 erfolgt nun in Richtung der Längserstreckung der Stützschienen 40. Dabei läuft die Tragvorrichtung 60 in Längsrichtung des Tragarms 55. Diese Stellbewegung ist mit den hinteren Stützkörpern 34.2 begrenzt, die in der maximalen Stellposition an den Anschlägen 43 zum Anliegen kommen. Diese maximale Stellposition entspricht der Wartungsposition, in der der Aufnahmebereich 25 für den Benutzer nun leicht zugänglich ist.

Selbstverständlich muss das Transferband 30 nicht vollständig bis in die in Figur 2 gezeigte Wartungsposition verstellt werden. Vielmehr kann auch nur ein teilweises Ausfahren des Transferbands 30 aus dem Aufnahmebereich 25 heraus erfolgen. Auch hierdurch ergibt sich eine geeignete Wartungsposition. Vorzugsweise ist es so, dass der Stellweg der Stellbewegung des Transferbands 30 zumindest der Hälfte der Breite der Siebeinheit 20 (die Breite verläuft in Figur 1 senkrecht zur Bildebene) beträgt.

Nach Abschluss der Wartungsarbeiten kann das Transferband einfach wieder aus der Wartungsposition heraus in den Aufnahmebereich 25 zurückgeschoben werden. Dabei werden die vorderen Stützkörper 34.1 wieder über die Anschläge 43 gehoben. Anschließend wird das Transferband mittels der Zugvorrichtungen 71 im Bereich der Koppelstücke 35.1 abgesenkt, sodass die vorderen Stützkörper 34.1 wieder auf der Lauffläche 41 der Stützschiene 40 aufsitzen.

Abschließend kann die Tragvorrichtung 60 wieder von dem Tragarm 55 abgenommen und der Tragarm mittels der Schwenklagerung 51 seitlich angeklappt werden.

Die Aufbereitungsanlage 10 ist dann zur erneuten Verwendung verfügbar.

## Patentansprüche

1. Aufbereitungsanlage (10), mit einer Siebeinheit (20) zum Aussieben von Aufbereitungsmaterial, das der Siebeieinheit (20), insbesondere von einem Brechaggregat (13), zuführbar ist, wobei die Siebeinheit (20) wenigstens ein Siebdeck (21.1, 21.2) aufweist und die Siebeinheit (20) einen Ableitbereich (22) aufweist, über den Aufbereitungsmaterial die Siebeinheit (20) verlässt, wobei im Ableitbereich (22) ein, in einer Arbeitsposition befindliches Transferband (30) angeordnet ist, um Aufbereitungsmaterial von der Siebeinheit (20) im Ableitbereich (22) aufzunehmen, und wobei das Transferband (30) dabei in einem Aufnahmebereich (25) der Aufbereitungsanlage (10) angeordnet ist,
**dadurch gekennzeichnet,**
**dass** das Transferband (30) mittels einer Stelleinrichtung der Aufbereitungsanlage längs seiner Förderrichtung von der Arbeitsposition in eine Wartungsposition verstellbar ist, wobei das Transferband (30) in der Wartungsposition zumindest teilweise aus dem Ableitbereich (22) herausbewegt ist, und dass eine, an der Aufbereitungsanlage (10) angebrachte Hebevorrichtung (50) vorgesehen ist, die das Transferband (30) in der Wartungsposition mittels einer Hebeanordnung, insbesondere mittels eines Hebezeugs (70) trägt.

2. Aufbereitungsanlage nach Anspruch 1, **dadurch gekennzeichnet, dass** die Hebevorrichtung (50) mittels eines Schwenklagers (51) von einer Ruheposition in eine ausgeschwenkte Tragposition verschwenkbar ist.

3. Aufbereitungsanlage nach Anspruch 2, **dadurch gekennzeichnet, dass** die Hebevorrichtung (50) zwei zueinander beabstandete Lagerplatten (52) aufweist, die an einem Maschinengestell (10.1) der Aufbereitungsanlage (10) befestigt sind, dass zwischen den Lagerplatten (52) ein Lagerstück (53) gehalten ist, und dass das Lagerstück (53) mittels eines Lagerbolzens (54) mit den beiden Lagerplatte (52) schwenkbar verbunden ist.

4. Aufbereitungsanlage nach einem der Ansprüche 1 bis 3, **dadurch gekennzeichnet, dass** die Hebevorrichtung (50) einen Tragarm (55) aufweist, der von dem/einen Maschinengestell (10.1) absteht und dass der Tragarm (55) eine Tragvorrichtung (60) trägt, die in Richtung der Längserstreckung des Tragarms (55) verstellbar an dem Tragarm (55) angeordnet ist.

5. Aufbereitungsanlage nach Anspruch 4, **dadurch gekennzeichnet, dass** die Tragvorrichtung (60) einen Rollenträger (61) aufweist, an dem Tragrollen (62) drehbar gelagert sind, dass die Tragrollen (62) auf einer Rollenführung (55.1) des Tragarms (55) bei einer Verstellung der Tragvorrichtung (60) gegenüber dem Tragarm (55) abrollen, wobei die Rollenführung (55.1) vorzugsweise von einem Profilabschnitt des Tragarms (55), besonders bevorzugt von einem Gurt eines T-Trägers oder eines Doppel-T-Trägers gebildet ist.

6. Aufbereitungsanlage nach einem der Ansprüche 1 bis 5, **dadurch gekennzeichnet, dass** die Hebevorrichtung (50) in Schwerkraftrichtung oberhalb des Transferbands (30) angeordnet ist, dass die Tragvorrichtung (60) einen Hebezeugträger (64) aufweist, und dass das Transferband (30) in der Wartungsposition mittels des Hebezeugs (70) an dem Hebezeugträger (64) aufgehängt ist und sich vorzugsweise an seinem dem Aufnahmebereich (25) zugewandten Ende an der Stelleinrichtung abstützt.

7. Aufbereitungsanlage nach einem der Ansprüche 1 bis 6, **dadurch gekennzeichnet, dass** das Transferband (30) einen Träger (33) aufweist, an dem zwei Umlenkrollen (31) gelagert sind, dass ein endlos umlaufendes Förderband (32) um die Umlenkrollen (32) derart geführt ist, dass sich ein Lasttrum und ein Leertrum ergeben, dass in einem Bereich des Trägers (33) der in der Wartungsposition aus dem Aufnahmebereich (25) herausbewegt ist, vorzugsweise im Bereich der Umlenkrolle (31), mindestens ein Koppelstück (35.1, 35.2) an dem Träger (33) angekoppelt ist, an dem das Hebezeug (70) in der Wartungsposition angekoppelt ist.

8. Aufbereitungsanlage nach einem der Ansprüche 1 bis 7, **dadurch gekennzeichnet, dass** das Transferband (30) einen oder mehrere vordere und einen oder mehrere hintere Stützkörper (34.1 und 34.2) aufweist, dass in der Wartungsposition des Transferbands (30) der wenigstens eine vordere Stützkörper (34.1) in einem dem Aufnahmebereich (25) abgewandten Bereich und der wenigstens eine hintere Stützkörper (34.2) in einem dem Aufnahmebereich (25) zugewandten Bereich des Transferbands (30) angeordnet sind, und dass die Stützkörper (34.1 und 34.2) in der Arbeitsposition auf einer Stützschiene (40) abgestützt sind, um das Transferband (30) mittelbar oder unmittelbar an dem Maschinengestell (10.1) abzustützen.

9. Aufbereitungsanlage nach Anspruch 8, **dadurch gekennzeichnet, dass** zumindest einer der Stützkörper (34.1 und 34.2) von einer Führungsrolle gebildet sind, der drehbar an dem Transferband (30) gelagert ist und der sich in der Arbeitsposition auf einer Lauffläche (41) oder auf Laufflächen (41) der als Führungsschiene ausgebildeten Stützschiene (40) abstützt.

10. Aufbereitungsanlage nach einem der Ansprüche 1 bis 9, **dadurch gekennzeichnet, dass** das Transferband (30) mittels der Stelleinrichtung in mindestens zwei zueinander versetzte Arbeitspositionen bringbar ist,

11. Aufbereitungsanlage nach einem der Ansprüche 8 bis 10, **dadurch gekennzeichnet, dass** der Stellweg des wenigstens eine hinteren Stützkörpers (34.2) in der Wartungsposition an einem Anschlag (43), der mittelbar oder unmittelbar am Maschinengestell (10.1) angeordnet ist, begrenzt ist.
